# EUROPÄISCHE PATENTSCHRIFT

(11) **EP 3 007 936 B1**
(45) Veröffentlichungstag und Bekanntmachung des Hinweises auf die Patenterteilung: **11.10.2017**
(21) Anmeldenummer: 14725206.8
(22) Anmeldetag: 21.05.2014
(51) Int. Cl.: B60R 13/08, B62D 35/02

(54) **SCHUTZVORRICHTUNG ZUR ANORDNUNG IM VORDER- ODER HINTERWAGENBEREICH EINES KRAFTFAHRZEUGES, MIT EINEM UNTERBODEN AUS FASERVERSTÄRKTEM KUNSTSTOFF**
PROTECTIVE DEVICE FOR ARRANGING IN THE FRONT-END OR REAR-END REGION OF A MOTOR VEHICLE, COMPRISING AN UNDERBODY MADE OF FIBER-REINFORCED PLASTIC
DISPOSITIF DE PROTECTION DESTINÉ À ÊTRE PLACÉ DANS LA ZONE AVANT OU ARRIÈRE D'UN VÉHICULE À MOTEUR, POURVU D'UN FOND DE CAISSE EN PLASTIQUE RENFORCÉ PAR DES FIBRES

(30) Priorität: 12.06.2013 DE 102013106080
(43) Veröffentlichungstag der Anmeldung: 20.04.2016
(73) Patentinhaber: ThyssenKrupp Steel Europe AG, 47166 Duisburg (DE)
(72) Erfinder: PATBERG, Lothar, 47445 Moers (DE); MAYER, Stefan, 58239 Schwerte (DE); KRAHNERT, Torsten, 14554 Seddin (DE); HUFENBACH, Werner, 01324 Dresden (DE); LADUSCH, Enrico, 01187 Dresden (DE); WERNER, Jens, 01640 Coswig (DE); KIESSLING, André, 01307 Dresden (DE); HERBIG, Alexander, 01324 Dresden (DE); KIELE, Jörn, 01099 Dresden (DE); LEPPER, Martin, 01279 Dresden (DE)
(74) Vertreter: thyssenkrupp Intellectual Property GmbH
(86) Internationale Anmeldenummer: PCT/EP2014/060473
(87) Internationale Veröffentlichungsnummer: WO 2014/198508

(56) Entgegenhaltungen:
- DE-A1- 19 613 446
- DE-A1-102007 021 216
- DE-A1-102010 054 694

## Beschreibung

Die Erfindung betrifft eine Schutzvorrichtung zur Anordnung im Vorder- oder Hinterwagenbereich eines Kraftfahrzeuges, mit einem Unterboden aus faserverstärktem Kunststoff zum Schutz von darüber angeordneten Aggregaten oder Bauteilen vor Beschädigung infolge von Steinschlag oder Bodenkontakt, wobei der Unterboden dreidimensional strukturierte Bereiche zur Erhöhung seiner Steifigkeit aufweist, wobei der Unterboden zur Aufnahme von Fahrwerks- und/oder Crashlasten ausgelegt ist und integrierte Halterungen zur beweglichen Anbindung an Fahrwerkslenkern aufweist.

Derartige Vorrichtungen bzw. Fahrzeugunterböden sind bekannt.

Eine aus der DE 10 2007 053 569 A1 bekannte gattungsgemäße Vorrichtung umfasst als Unterboden ein großflächiges Abdeckteil aus faserverstärktem Kunststoff. Das Abdeckteil wird gegen tragende Bauteile der Fahrzeugkarosserie gesetzt und mit denselben fest verbunden. Der faserverstärkte Kunststoff ist durch eine thermoplastische Kunststoffmatrix mit wenigstens einer zumindest partiell in Bereichen erhöhter Belastungen des Abdeckteils eingelagerten mattenförmigen Gewebeschicht ausgebildet. Die mattenförmige Gewebeschicht kann dabei durch zusätzlich in die Kunststoffmatrix eingelagerte Verstärkungsfasern ergänzt sein, wobei die Gewebeschicht und die etwaigen zusätzlichen Verstärkungsfasern in Abhängigkeit von den zu erwartenden Belastungen durch gerichtete und/oder ungerichtete Endlosfasern und/oder Schnittfasern gebildet sein können. Als Verstärkungsfasern sind insbesondere Glas- und Kohlenstofffasern genannt. Des Weiteren weist das Abdeckteil an seinem vorderen sowie hinteren Ende je eine einen weitestgehend starren Träger ausbildende und sich in Fahrzeugquerrichtung erstreckende sickenförmige Profilierung auf. Diese Profilierungen sind mit Anschraubpunkten zur Festlegung des Abdeckteils zum einen an einem Hilfsrahmen und zum anderen an zwei beidseitig der Kraftfahrzeugkarosserie angeordneten Längsträgern versehen. Ferner weist das Abdeckteil seitlich abgestellte Stege auf, an denen weitere Anschraubpunkte vorgesehen sind, die ihrerseits der festen Verbindung des Abdeckteils an den vorderen Radhäusern dienen.

Die Automobilindustrie ist seit längerem damit befasst, leichtere Karosserie- sowie Fahrwerkskomponenten mit vergleichbaren oder verbesserten mechanischen Eigenschaften kostengünstig herzustellen. Dieser Entwicklung liegt die Zielsetzung eines geringeren Kraftstoffverbrauchs bzw. verminderter Schadstoffemissionen, insbesondere von CO₂, zugrunde. Leichten Karosseriebauteilen mit gutem Crashverhalten kommt insbesondere auch hinsichtlich Elektrofahrzeugen eine hohe Bedeutung zu, wenn es darum geht, die Reichweite und/oder Beschleunigung solcher Fahrzeuge zu verbessern.

Eine gattungsgemäße Schutzvorrichtung ist in der DE 10 2010 054 694 A1 und in der DE 196 13 446 A1 gezeigt. Der vorliegenden Erfindung lag die Aufgabe zugrunde, eine Vorrichtung der eingangs genannten Art zu schaffen, die bei geringem Gewicht eine hohe Steifigkeit zur Aufnahme von Betriebs- sowie Crashlasten aufweist, kostengünstig hergestellt werden kann und die Möglichkeit einer weiteren Reduzierung des Fahrzeuggewichtes bei vergleichbaren oder verbesserten mechanischen Eigenschaften bietet.

Diese Aufgabe wird erfindungsgemäß durch eine Vorrichtung mit den Merkmalen des Anspruchs 1 gelöst. Bevorzugte und vorteilhafte Ausgestaltungen der erfindungsgemäßen Vorrichtung ergeben sich aus den Merkmalen der Unteransprüche.

Die erfindungsgemäße Vorrichtung ist dadurch gekennzeichnet, dass in dem Unterboden eine Vertiefung zur Aufnahme eines Lenkgetriebes oder Lenkzylinders integral ausgebildet, beispielsweise eingeformt ist.

Die erfindungsgemäße Vorrichtung basiert auf dem Gedanken, in einem Fahrzeugunterboden, der üblicherweise nur oder primär dem Schutz des Motorraumes und der darin angeordneten Aggregate vor Beschädigung infolge Steinschlag, Bodenkontakt und dergleichen mehr dient, zusätzliche Funktionen bzw. Teilfunktionen zu integrieren, um dadurch eine Reduzierung des Fahrzeuggewichtes bei vergleichbaren oder verbesserten mechanischen Eigenschaften zu erreichen. Der Unterboden der erfindungsgemäßen Vorrichtung dient insbesondere der Aufnahme sowie Übertragung von Schubkräften. Er kann daher auch als Schubfeld bezeichnet werden.

Es wurde von den Erfindern erkannt, dass sich das Fahrzeuggewicht insbesondere durch eine Integration von das Fahrwerk betreffende Anbindungs- bzw. Gelenkfunktionen in einen Fahrzeugunterboden reduzieren lässt. Hierzu ist es erforderlich, dass der Fahrzeugunterboden ein gewisses Maß an Fahrwerkslasten aufnehmen kann. Ferner wurde von den Erfindern erkannt, dass der Fahrzeugunterboden dann auch gut geeignet ist, um Crashlasten aufzunehmen, und dass somit andere Fahrwerks- und/oder Karosseriebauteile gegebenenfalls weniger biege- und/oder torsionssteif und damit im Gewicht leichter ausgeführt werden können. Weiter wurde erkannt, dass sich die Integration von zusätzlichen Funktionen bzw. Teilfunktionen in einen Fahrzeugboden kostengünstig realisieren lässt.

Die erfindungsgemäße Vorrichtung sieht vor, dass in dem Unterboden eine Vertiefung zur Aufnahme eines Lenkgetriebes oder Lenkzylinders integral ausgebildet, beispielsweise eingeformt ist. Diese Ausgestaltung stellt eine Bauraumintegration dar, die eine größere Flexibilität hinsichtlich der Anordnung des Lenkgetriebes oder Lenkzylinders bzw. einen Bauraumgewinn für die Anordnung anderer Fahrzeugkomponenten bietet. Insbesondere kann durch diese Ausgestaltung ein relativ großer Abstand zwischen Unterboden und Fahrbahn erreicht bzw. beibehalten werden. Zudem ergibt sich durch diese integrale Vertiefung eine Verbesserung der Steifigkeit des Unterbodens und damit der Vorderwagenkonstruktion insbesondere in Fahrzeugquerrichtung. Die Vertiefung ist dabei vorzugsweise mit Mitteln, insbesondere Durchgangslöchern, zur Befestigung des Lenkgetriebes oder Lenkzylinders am Unterboden versehen. Hierdurch wird die Karosseriesteifigkeit weiter verbessert.

Eine bevorzugte Ausgestaltung der erfindungsgemäßen Vorrichtung ist dadurch gekennzeichnet, dass in dem Unterboden quer zur Fahrzeuglängsachse verlaufende Mulden integral ausgebildet sind, welche die Halterungen zur beweglichen Fahrwerkslenkeranbindung aufweisen. Hierdurch lassen sich die Halterungen zur beweglichen Anbindung von Fahrwerkslenkern in kostengünstiger und zuverlässiger Weise realisieren, beispielsweise indem an den Flanken der Mulden miteinander fluchtende Lageraugen oder Buchsen vorgesehen werden, die paarweise eine Schwenkachse des anzubindenden Lenkers definieren.

Nach einer weiteren Ausgestaltung der erfindungsgemäßen Vorrichtung ist an dem Unterboden mindestens ein Fahrwerksstabilisator direkt befestigt. Auch diese Ausgestaltung trägt zu einer Optimierung des Aufnahmevermögens von Betriebslasten, insbesondere von Fahrwerkslasten, sowie der Erhöhung der Karosseriesteifigkeit bei gleichzeitiger Reduzierung oder zumindest Begrenzung des Fahrzeuggewichts bei.

Eine weitere vorteilhafte Funktionsintegration, mit der sich eine Verringerung des Fahrzeuggewichts bzw. eine hohe Karosseriesteifigkeit erzielen lässt, besteht nach einer weiteren Ausgestaltung der Vorrichtung darin, dass in den Unterboden mindestens eine zusätzliche Vertiefung zur Aufnahme und/oder Festlegung einer Fahrzeugbatterie, eines Fluidbehälters, eines Wärmetauschers, einer Pumpe oder einer elektronischen Steuerung integral ausgebildet ist.

Zur Erzielung eines geringen Fahrzeuggewichts bei hoher Karosseriesteifigkeit ist es ferner vorteilhaft, wenn gemäß einer weiteren Ausgestaltung der Vorrichtung der Unterboden mit Versteifungselementen in Form von geschlossenen Hohlkörpern und/oder Hohlräume versehen ist. Beispielsweise sind hierzu in dem Unterboden längliche Mulden oder Sicken eingeformt, in welche die Hohlkörper eingesetzt sind. Zur Erzielung einer hohen Schubsteifigkeit wird insbesondere vorgeschlagen, die besagten Hohlkörper und/oder Hohlräume länglich auszubilden, und zwar derart, dass mindestens zwei derselben sich kreuzen und schräg zur Fahrzeuglängsachse verlaufen.

Des Weiteren wird vorgeschlagen, auf oder zwischen den Faserlagen des Unterbodens schwingungs- und/oder schalldämpfende Elemente oder Schichten vorzusehen, wobei diese Element oder Schichten vorzugsweise schon während der Herstellung des Unterbodens integriert werden. Beispielsweise weist der Unterboden einen sandwichartigen Aufbau auf, der eine schwingungs- und/oder schalldämpfende Zwischenschicht enthält. Die Zwischenschicht ist dabei vorzugsweise nur partiell ausgebildet, d.h. in einem oder mehreren vorgegebenen Flächenbereichen des Unterbodens vorgesehen.

Eine weitere vorteilhafte Ausgestaltung der Vorrichtung ist dadurch gekennzeichnet, dass der Unterboden in mindestens zwei Abschnitte unterteilt ist, die als separat montierbare Bauteile an einem quer zur Fahrzeuglängsachse verlaufenden Fügebereich aneinanderstoßen oder überlappen. Hierdurch wird die Reparaturfreundlichkeit verbessert.

Um die Schutzwirkung bzw. Lebensdauer der Vorrichtung zu erhöhen, sieht eine weitere bevorzugte Ausgestaltung vor, dass der Unterboden auf seiner Unterseite zumindest partiell mit einem Blech und/oder einer salzresistenten Beschichtung versehen ist. Durch das Blech, das vorzugsweise aus Leichtmetall oder einem dünnen gehärteten Stahlblech besteht, wird die Steinschlagfestigkeit des Unterbodens optimiert. Anstelle eines solchen Bleches kann der Unterboden auf seiner Unterseite zumindest partiell auch mit einem Verstärkungsvlies aus anorganischen Fasern, insbesondere Glas- und/oder Aramidfasern versehen sein.

Darüber hinaus kann die Vorrichtung einen Feuchtigkeitsabschluss von Fahrzeugbereichen (z.B. gegenüber Spritzwasser oder ähnlichem) definieren. Die erfindungsgemäße Vorrichtung bzw. deren Unterboden trennt dann einen Nassbereich von einem Trockenbereich des Kraftfahrzeuges.

Nachfolgend wird die Erfindung anhand einer mehrere Ausführungsbeispiele darstellenden Zeichnung näher erläutert. Es zeigen schematisch:
- Fig. 1 - Fig. 3: unterschiedliche Ausführungsbeispiele einer erfindungsgemäßen Vorrichtung, jeweils in einer perspektivischen Draufsicht; und
- Fig. 4: einen Abschnitt eines Unterbodens einer erfindungsgemäßen Vorrichtung, in Schnittansicht.

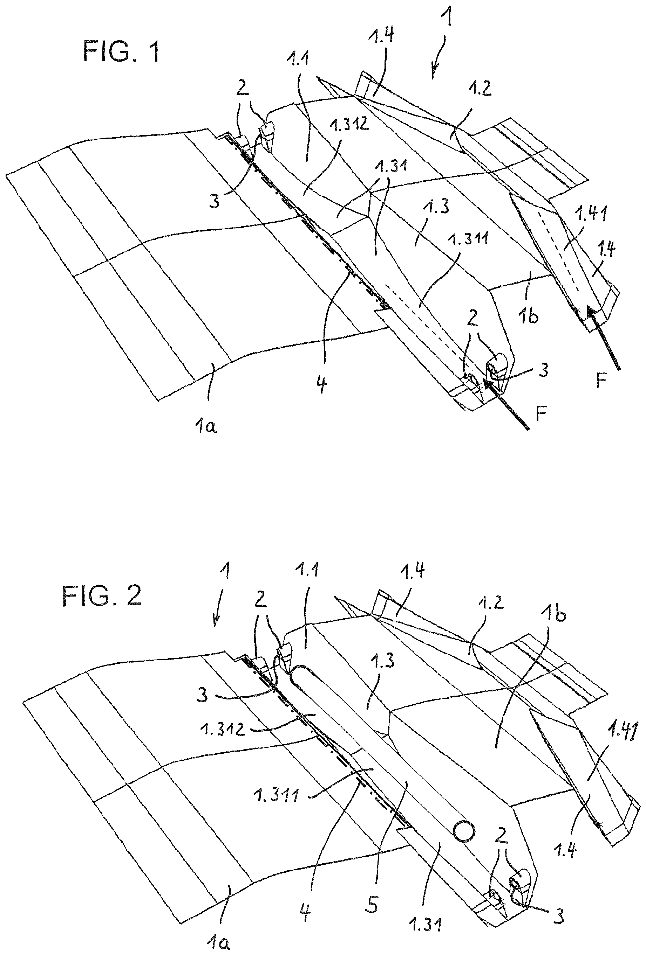

Die in Fig. 1 dargestellte erfindungsgemäße Vorrichtung besteht im Wesentlichen aus einem Unterboden 1 zur Anordnung im Vorderwagenbereich eines Kraftfahrzeuges. Der Unterboden 1 ist aus faserverstärktem Kunststoff hergestellt. Er dient insbesondere dem Schutz von darüber angeordneten Aggregaten und Bauteilen vor Steinschlag und flüssigen Medien. Zudem dient der Unterboden 1 der Sicherstellung einer hohen Fahrzeugstruktursteifigkeit bzw. Karosseriesteifigkeit und insbesondere der Aufnahme von Betriebs- sowie Crashlasten. Hierzu weist der Unterboden 1 unter anderem dreidimensional strukturierte Bereiche 1.1, 1.2 auf.

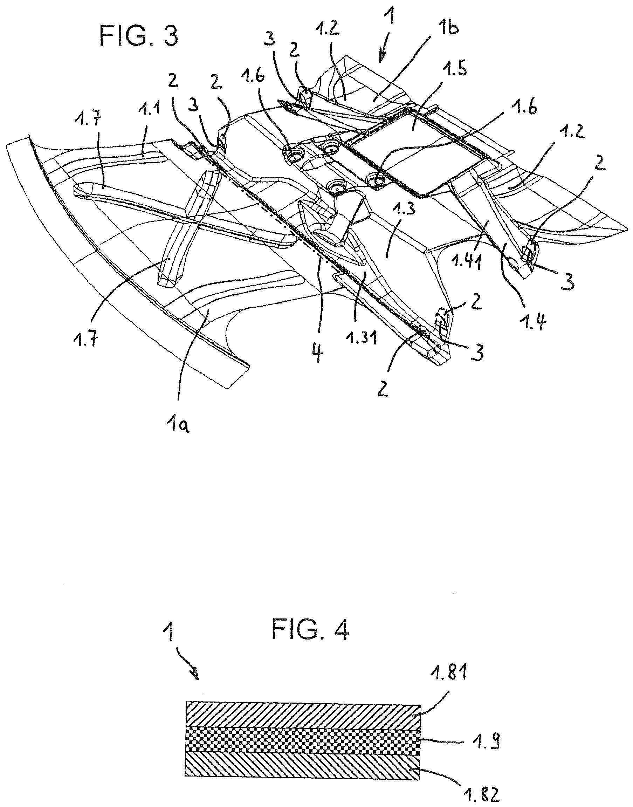

Der faserverstärkte Kunststoff des Unterbodens 1 enthält mindestens ein textiles Flächengebilde, zum Beispiel ein Gewebe, Gelege oder Geflecht aus Verstärkungsfasern, vorzugsweise Glas- und/oder Kohlenstofffasern, wobei das textile Flächengebilde in eine Matrix aus einem thermoplastischen oder duroplastischen Kunststoff eingebettet ist. Vorzugsweise sind in dem Kunststoff des Unterbodens 1 zumindest partiell mehrere Schichten eines solchen oder verschiedener textiler Flächengebilde aus Verstärkungsfasern eingebettet (vgl. auch Fig. 4). Die Wandstärke des Unterbodens 1 liegt vorzugsweise im Bereich von 2 bis 5 mm, insbesondere 3 bis 4 mm.

Der erfindungsgemäße Unterboden 1, der auch als Schubfeld bezeichnet werden kann, ist insbesondere zur Aufnahme von Fahrwerkslasten als auch Crashlasten ausgelegt und weist integrierte Halterungen 2 zur Anbindung von Fahrwerkskomponenten, vorzugsweise zur beweglichen Anbindung von ein- oder mehrarmigen Fahrwerkslenkern auf. Weitere integrierte Halterungen, hier nicht dargestellt, können zur Anbindung an die Karosserie, vorzugsweise an hier nicht dargestellte Längsträger vorgesehen sein. Die Halterungen 2 sind in länglichen Mulden 1.3, 1.4 ausgebildet oder angeordnet, die im Unterboden 1 integral ausgebildet sind und quer zur Fahrzeuglängsachse bzw. Längsachse des Unterbodens 1 verlaufen. An den Flanken der Mulden 1.3, 1.4 sind Paare von vorstehenden, einander zugewandten Lagerelementen vorgesehen, die miteinander fluchtende Lagerbuchsen 3 oder Lageraugen (Durchgangsöffnungen) 3 aufweisen.

Darüber hinaus ist der Unterboden 1 mit Anbindungsmitteln (nicht gezeigt), beispielsweise Anschraublöchern versehen, an denen er am Fahrschemel des Kraftfahrzeuges befestigt werden kann. Des Weiteren kann der Unterboden 1 auch Anbindungselemente (nicht gezeigt) für eine direkte Befestigung von Fahrwerksstabilisatoren aufweisen.

Die Mulden 1.3, 1.4 weisen über ihre Länge keine einheitliche Tiefe oder Profilform auf. In den Figuren 1 bis 3 ist jeweils zu erkennen, dass die Mulden 1.3, 1.4 ihre größte Tiefe am seitlichen Ende des Unterbodens 1 besitzen. Dementsprechend steigt der Boden 1.31, 1.41 der Mulde 1.3, 1.4 vom seitlichen Ende des Unterbodens 1 in Richtung Längsmittelachse (Mitte) desselben kontinuierlich oder allmählich an. In den in der Zeichnung dargestellten Ausführungsbeispielen definieren zwei miteinander fluchtende Muldenbodenabschnitte 1.311, 1.312 zusammen einen sattelförmigen Muldenboden 1.31. Die Formgebung des Unterbodens 1, insbesondere der Verlauf des Muldenbodens 1.31, 1.41 entspricht somit im Wesentlichen den Kraftrichtungen der am Unterboden montierten Fahrwerkslenker (Querlenker). In Fig. 1 sind die Kraftrichtungen der (nicht gezeigten) Lenker durch Pfeile F und gestrichelte Linien angedeutet.

Die Faserorientierungen des aus faserverstärktem Kunststoff hergestellten Unterbodens 1, der flächenspezifische Fasergehalt und/oder die Wandstärke des Unterbodens 1 sind in bestimmten Flächenbereichen den zu erwartenden Belastungen angepasst. So sind die Verstärkungsfasern zumindest in einem oder mehreren Bereichen in einer +/- 45°-Orientierung zur Krafteinleitungsrichtung für eine optimale Aufnahme und Übertragung von Schubkräften angeordnet.

Zur Verbesserung der Reparaturfreundlichkeit kann der erfindungsgemäße Unterboden 1 mehrteilig ausgebildet sein. Beispielsweise kann im vorderen Bereich des Unterbodens 1 eine Trennung erfolgen. Vorzugsweise ist der Unterboden 1 in zwei Abschnitte 1a, 1b unterteilt, die als separat montierbare Bauteile an einem quer zur Fahrzeuglängsachse verlaufenden Fügebereich 4 aneinanderstoßen oder überlappen. In den Figuren 1 bis 3 ist ein solcher Füge- bzw. Überlappungsbereich 4 durch eine strichpunktierte Linie angedeutet.

In dem in Fig. 2 skizzierten Ausführungsbeispiel ist an dem Unterboden 1 ein Lenkzylinder oder Lenkgetriebe 5 befestigt. Somit kann die für ein optimales Fahrverhalten notwendige, steife Lenkgetriebeanbindung gewährleistet werden. Das Lenkgetriebe oder der Lenkzylinder 5 ist in der muldenförmigen, integral ausgebildeten Vertiefung 1.3 des Unterbodens 1 aufgenommen.

Das in Fig. 3 dargestellte Ausführungsbeispiel unterscheidet sich von den in den Figuren 1 und 2 skizzierten Beispielen insbesondere dadurch, dass in dem Unterboden 1 zusätzliche Funktionsflächen 1.5, 1.6 integriert sind, die beispielsweise der Aufnahme oder Einbindung einer Fahrzeugbatterie und/oder weiterer Peripheriekomponenten (nicht gezeigt), wie etwa eines Wärmetauschers oder Scheibenwaschflüssigkeitsbehälters dienen.

Des Weiteren weist der in Fig. 3 dargestellte Unterboden 1 zusätzliche Verstärkungselemente 1.7 zur Erhöhung der Schubsteifigkeit auf. Beispielsweise können hierzu Schaumelemente oder andere Strukturelemente niedriger Dichte zwischen mindestens zwei Faserlagen des Unterbodens 1 eingebracht sein, um so durch einen Sandwichaufbau die Bauteilsteifigkeit in diesem Bereich zu erhöhen. Ebenso können in dem erfindungsgemäßen Unterboden 1 Hohlräume, insbesondere längliche oder gitterförmige Hohlräume zwischen mindestens zwei Faserlagen vorgesehen sein, um den gleichen Effekt zu erreichen.

Der vordere Abschnitt 1a des Unterbodens 1 gemäß Fig. 3 weist integrierte Versteifungselemente (Verstärkungselemente) 1.7 in Form von geschlossenen Hohlräumen auf. Die Hohlräume sind dabei länglich ausgebildet, kreuzen einander und verlaufen schräg zur Fahrzeuglängsachse. In den Hohlräumen sind vorzugsweise Schaumkerne oder schlauch- oder rohrförmige Hohlkörper angeordnet.

Fig. 4 zeigt ein Ausführungsbeispiel eines erfindungsgemäßen Unterbodens 1 im Querschnitt. Es ist zu erkennen, dass der Unterboden 1 einen sandwichartigen Aufbau aufweist, wobei zwischen zwei Deck- oder Außenschichten 1.81, 1.82 aus faserverstärktem Kunststoff ein schwingungs- und/oder schalldämpfende Zwischenschicht 1.9 angeordnet ist. Die Zwischenschicht 1.9 ist beispielsweise aus einem Elastomer oder einem anderen gummielastischen Material hergestellt. In weiterer Ausgestaltung des erfindungsgemäßen Unterbodens 1 ist die Zwischenschicht 1.9 partiell ausgebildet, also nur in einem oder mehreren vorgegebenen Flächenbereichen des Unterbodens 1 vorgesehen.

Die Ausführung der erfindungsgemäßen Vorrichtung ist nicht auf die in der Zeichnung dargestellten Ausführungsbeispiele beschränkt. Vielmehr sind weitere Varianten denkbar, die auch bei einer von der Zeichnung abweichenden Gestaltung von der in den beiliegenden Ansprüchen angegebenen Erfindung Gebrauch machen. So kann beispielsweise der Unterboden 1 auf seiner Unterseite auch zumindest partiell mit einem Blech und/oder einer salzresistenten Beschichtung versehen sein.

## Patentansprüche

1. Schutzvorrichtung zur Anordnung im Vorder- oder Hinterwagenbereich eines Kraftfahrzeuges, mit einem Unterboden (1) aus faserverstärktem Kunststoff zum Schutz von darüber angeordneten Aggregaten oder Bauteilen vor Beschädigung infolge von Steinschlag oder Bodenkontakt, wobei der Unterboden dreidimensional strukturierte Bereiche (1.1, 1.2) zur Erhöhung seiner Steifigkeit aufweist, wobei der Unterboden (1) zur Aufnahme von Fahrwerks- und/oder Crashlasten ausgelegt ist und integrierte Halterungen (2) zur beweglichen Anbindung von Fahrwerkslenkern aufweist, **dadurch gekennzeichnet, dass** in dem Unterboden eine Vertiefung (1.3) zur Aufnahme eines Lenkgetriebes (5) oder Lenkzylinders integral ausgebildet ist.

2. Vorrichtung nach Anspruch 1, **dadurch gekennzeichnet, dass** in dem Unterboden quer zur Fahrzeuglängsachse verlaufende Mulden (1.3, 1.4) integral ausgebildet sind, welche die Halterungen (2) zur beweglichen Anbindung von Fahrwerkslenkern aufweisen.

3. Vorrichtung nach Anspruch 1, **dadurch gekennzeichnet, dass** die Vertiefung mit Mitteln, insbesondere Durchgangslöchern, zur Befestigung des Lenkgetriebes (5) oder Lenkzylinders am Unterboden (1) versehen ist.

4. Vorrichtung nach einem der Ansprüche 1 bis 3, **dadurch gekennzeichnet, dass** an dem Unterboden (1) mindestens ein Fahrwerksstabilisator direkt befestigt ist.

5. Vorrichtung nach einem der Ansprüche 1 bis 4, **dadurch gekennzeichnet, dass** in den Unterboden (1) mindestens eine zusätzliche Vertiefung (1.5, 1.6) zur Aufnahme und/oder Festlegung einer Fahrzeugbatterie, eines Fluidbehälters, eines Wärmetauschers, einer Pumpe oder einer elektronischen Steuerung integral ausgebildet ist.

## Claims

1. Protective apparatus for arranging in the front or rear region of a motor vehicle, having an undertray (1) made from fiber-reinforced plastic for protecting assemblies or components arranged above it against damage as a consequence of stone chipping or ground contact, the undertray having three-dimensionally structured regions (1.1, 1.2) for increasing its rigidity, wherein the undertray (1) is designed to absorb chassis and/or crash loads and has integrated holders (2) for movably attaching chassis links, **characterized in that** a depression (1.3) for receiving a steering gear (5) or steering cylinder is configured integrally in the undertray.

2. Apparatus according to Claim 1, **characterized in that** recesses (1.3, 1.4) which run transversely with respect to the vehicle longitudinal axis are configured integrally in the undertray, which recesses (1.3, 1.4) have the holders (2) for movably attaching chassis links.

3. Apparatus according to Claim 1, **characterized in that** the depression is provided with means, in particular through holes, for fastening the steering gear (5) or steering cylinder to the undertray (1).

4. Apparatus according to one of Claims 1 to 3, **characterized in that** at least one chassis stabilizer is fastened directly to the undertray (1).

5. Apparatus according to one of Claims 1 to 4, **characterized in that** at least one additional depression (1.5, 1.6) for receiving and/or fixing a vehicle battery, a fluid reservoir, a heat exchanger, a pump or an electronic controller is configured integrally in the undertray (1).

## Revendications

1. Dispositif de protection destiné à être disposé dans la région de véhicule avant ou arrière d'un véhicule automobile, comprenant un dessous de caisse (1) en plastique renforcé par des fibres pour la protection d'agrégats ou de composants disposés par-dessus contre des endommagements dus à des projections de pierre ou à un contact avec le sol, le dessous de caisse présentant des régions structurées tridimensionnelles (1.1, 1.2) pour augmenter sa rigidité, le dessous de caisse (1) étant conçu pour recevoir des charges de châssis et/ou de collision et présentant des fixations intégrées (2) pour le raccordement mobile de bras de suspension de châssis, **caractérisé en ce qu'**un renforcement (1.3) pour recevoir un mécanisme de direction (5) ou un cylindre de direction est réalisé intégralement dans le dessous de caisse.

2. Dispositif selon la revendication 1, **caractérisé en ce que** des creux (1.3, 1.4) s'étendant transversalement à l'axe longitudinal du véhicule sont réalisés intégralement dans le dessous de caisse, lesquels présentent les fixations (2) pour le raccordement mobile de bras de suspension de châssis.

3. Dispositif selon la revendication 1, **caractérisé en ce que** le renfoncement est pourvu de moyens, en particulier de trous traversants, pour la fixation du mécanisme de direction (5) ou du cylindre de direction au dessous de caisse (1).

4. Dispositif selon l'une quelconque des revendications 1 à 3, **caractérisé en ce qu'**au moins un stabilisateur de châssis est fixé directement au dessous de caisse (1).

5. Dispositif selon l'une quelconque des revendications 1 à 4, **caractérisé en ce qu'**au moins un renforcement supplémentaire (1.5, 1.6) est réalisé intégralement dans le dessous de caisse (1) pour recevoir et/ou fixer une batterie de véhicule, un récipient de fluide, un échangeur de chaleur, une pompe ou une commande électronique.
